(19)

Europäisches
Patentamt

European
Patent Office

Office européen
des brevets

(11) **EP 2 626 540 A1**

(12) **EUROPEAN PATENT APPLICATION**
published in accordance with Art. 153(4) EPC

| | |
|---|---|
| (43) Date of publication:<br>**14.08.2013 Bulletin 2013/33** | (51) Int Cl.:<br>***F02D 45/00*** *(2006.01)*     ***F02D 41/04*** *(2006.01)*<br>***F02D 41/40*** *(2006.01)* |
| (21) Application number: **10858120.8** | (86) International application number:<br>**PCT/JP2010/067548** |
| (22) Date of filing: **06.10.2010** | (87) International publication number:<br>**WO 2012/046312 (12.04.2012 Gazette 2012/15)** |

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR** | (72) Inventor: **HASEGAWA, Ryo**<br>**Toyota-shi**<br>**Aichi-ken 471-8571 (JP)** |
| | (74) Representative: **TBK**<br>**Bavariaring 4-6**<br>**80336 München (DE)** |
| (71) Applicant: **TOYOTA JIDOSHA KABUSHIKI<br>KAISHA**<br>**Aichi-ken, 471-8571 (JP)** | |

(54) **APPARATUS FOR ESTIMATING IGNITION DELAY PERIOD OF INTERNAL COMBUSTION ENGINE AND APPARATUS FOR CONTROLLING IGNITION PERIOD**

(57)  A period of time from a point in time at which pilot injection is executed until an equivalence ratio in fuel spray, after exceeding a combustible equivalence ratio, falls below the combustible equivalence ratio is calculated as a physical ignition delay period. A chemical ignition delay period is calculated from the temperature and pressure inside a combustion chamber at a point in time at which the equivalence ratio in the fuel spray reached the combustible equivalence ratio. A total ignition delay period is calculated from the above-calculated ignition delay periods. The oxygen concentration and temperature inside the combustion chamber are adjusted such that the total ignition delay period matches a target ignition delay period.

FIG.8

**Description**

Technical Field

The present invention relates to apparatuses for estimating an ignition delay period of compression self-ignition internal combustion engines represented by diesel engines, and to apparatuses for controlling an ignition time by achieving an appropriate ignition delay period. In particular, the present invention relates to measures to improve the accuracy of estimation of the ignition delay period.

Background Art

Combustion of a diesel engine mounted in an automobile or the like is known to be mainly executed in the form of premixed combustion and diffusion combustion. Specifically, when a fuel injection from an injector into a combustion chamber is started, first, a combustible air-fuel mixture is generated due to evaporative diffusion of fuel (an ignition delay period). Next, this combustible air-fuel mixture undergoes self-ignition nearly simultaneously at several locations in the combustion chamber, and combustion progresses rapidly (premixed combustion). A fuel injection is continued, or a fuel injection is started after a predetermined interval (a fuel injection suspending period) into the combustion chamber whose temperature has been sufficiently increased by this premixed combustion, thereby executing diffusion combustion. Thereafter, since unburnt fuel is still present after the fuel injection is terminated, heat generation continues for a while (an afterburning period).

Recently, due to enforcement of tougher automobile exhaust emissions regulations (for example, Euro 6), improving exhaust emissions by achieving an appropriate air-fuel mixture ignition time and preventing combustion fluctuation and misfire are required even in situations where parameters (also referred to as combustion states) that affect the air-fuel mixture ignition time, such as the pressure, temperature, amount of gas (air), oxygen concentration, and the like in a cylinder, change due to environmental changes, operation transients, etc.

Causes of ignition delay in a diesel engine include the case of a situation in which various conditions (for example, environmental conditions) that affect the air-fuel mixture ignition time are different from general, standard states. Specifically, it is possible that ignition delay of air-fuel mixture will be significant under such conditions as when running in a highland where the altitude is high, in the case where fuel properties (e.g., cetane number) is worse than standard properties (in the case where a low-cetane number fuel is used), when the outside air temperature is low, or when an engine load rapidly changes (at the time of operation transients).

Ignition delay of air-fuel mixture in a diesel engine includes physical ignition delay and chemical ignition delay. The physical ignition delay is a period of time required for evaporation/mixture of fuel droplets. On the other hand, the chemical ignition delay is a period of time required for chemical bonding/decomposition and exothermic oxidation of fuel vapor.

As a technique for achieving an appropriate ignition time of the air-fuel mixture, it can be conceived to estimate an air-fuel mixture ignition delay period and control the form of fuel injection such that this ignition delay period matches a predetermined appropriate period. Techniques made in light of this point are proposed in Patent Literatures 1 to 3 listed below.

Patent Literature 1 discloses estimating an ignition delay period based on a compression end temperature and compression end pressure (a temperature and the pressure in a combustion chamber at the point in time at which a piston reached compression top dead center) in a cylinder, and controlling a fuel injection period in accordance with the ignition delay period.

Patent Literature 2 discloses achieving an optimum timing of combustion of fuel injected during pilot injection by estimating an ignition delay period of the fuel injected during pilot injection to be longer at a very low temperature and advancing the injection time of the pilot injection.

Patent Literature 3 discloses estimating an ignition delay period of main injection to be longer if the highest value of the heat generation ratio is lower than that for a standard cetane fuel, improving ignition of pilot injection fuel and main injection fuel by increasing a pilot injection amount, and shortening the ignition delay period of the main injection.

Prior Art Document

Patent Document

[Patent Document 1] JP H11-148412A
[Patent Document 2] JP H11-93735A

[Patent Document 3] JP 2006-183466A

Summary of Invention

Problem to be Solved by the Invention

However, in the conventional techniques, no technique that can sufficiently improve the accuracy of estimation of an air-fuel mixture ignition delay period has been proposed yet. In particular, there has been almost no development so far of a technique that can improve the accuracy of estimation of physical ignition delay.

In other words, with the techniques disclosed in the above-listed patent literatures, the ignition delay period is only estimated by recognizing environmental conditions around a combustion field (parameters that indirectly affect the combustion field), such as the in-cylinder temperature, in-cylinder pressure, or outside air temperature. Therefore, a spray state (whether or not conditions under which ignition can be executed in the combustion field are established) in an actual combustion field is not directly estimated, and it cannot be said that the estimation of the ignition delay period is sufficiently reliable. For example, even if the in-cylinder temperature and the in-cylinder pressure are recognized with high accuracy, it is difficult to estimate a reliable ignition delay period because a physical ignition delay period changes if the amount of intake air, the swirl velocity, a gas composition, or the like is different.

The present invention was made in light of the foregoing point, and it is an object thereof to provide an ignition delay period estimation apparatus for an internal combustion engine that can estimate an ignition delay period of air-fuel mixture with high accuracy and contribute to achievement of an appropriate ignition delay period, and an ignition time control apparatus that appropriately controls the ignition delay period estimated by the ignition delay period estimation apparatus.

Means for Solving the Problems

- Principles of Solution -

According to the principles of solution of the present invention for achieving the above-described object, a condition that affects whether or not an air-fuel mixture in a combustion field is ignited is directly recognized to estimate an ignition delay period by estimating the air-fuel ignition delay period based on an equivalence ratio in a fuel spray, thereby improving the reliability of the ignition delay period estimation. Also, a deviation of a target ignition time with respect to the reliable ignition delay period is recognized in order to match the ignition time of the air-fuel mixture with the target ignition time by achieving an appropriate ignition delay period.

- Solving Means -

Specifically, the present invention assumes an ignition delay period estimation apparatus for an internal combustion engine that estimates an ignition delay period of fuel injected from a fuel injection valve toward the inside of a combustion chamber. This ignition delay period estimation apparatus for an internal combustion engine is provided with a physical ignition delay period calculation means, a chemical ignition delay period calculation means, and a total ignition delay period calculation means. The physical ignition delay period calculation means calculates a physical ignition delay period based on an equivalence ratio in a spray of fuel injected from the fuel injection valve. The chemical ignition delay period calculation means calculates a chemical ignition delay period based on an environmental condition inside the combustion chamber at a point in time at which the equivalence ratio in the spray of the fuel injected from the fuel injection valve reached a predetermined equivalence ratio. The total ignition delay period calculation means calculates a total ignition delay period of the fuel based on the calculated physical ignition delay period and the chemical ignition delay period.

With this specific configuration, both the physical ignition delay period and the chemical ignition delay period are calculated based on the equivalence ratio in the fuel spray, or using the equivalence ratio in the spray as a reference. In other words, the ignition delay periods are estimated by directly recognizing a spray state (an index that indicates ease of ignition) in an actual combustion field, rather than estimating the ignition delay periods by recognizing parameters that indirectly affect the combustion field. Therefore, the physical ignition delay period and the chemical ignition delay period can be estimated with high accuracy even if an environmental change, an operation transient, or the like is occurring, and as a result, the total ignition delay period can also be estimated with high accuracy.

In the operation of calculating the physical ignition delay period by the physical ignition delay period calculation means, specifically, a period of time from a starting point when the fuel was injected from the fuel injection valve until a point in time when the equivalence ratio in the fuel spray, after exceeding an in-spray combustible equivalence ratio at which ignition is possible, falls below the in-spray combustible equivalence ratio is calculated as the physical ignition delay period.

On the other hand, in the operation of calculating the chemical ignition delay period by the chemical ignition delay period calculation means, specifically, the chemical ignition delay period is calculated based on the temperature and the pressure inside the combustion chamber at a point in time after the fuel is injected from the fuel injection valve and at which the equivalence ratio in the fuel spray reached the in-spray combustible equivalence ratio at which ignition is possible.

Thus, the total ignition delay period can be estimated with high accuracy by calculating the physical ignition delay period and the chemical ignition delay period, which can help achievement of an appropriate ignition delay period.

Also, it is determined whether or not the equivalence ratio in the spray of the fuel injected from the fuel injection valve reached the in-spray combustible equivalence ratio and the fuel was ignited. If the equivalence ratio in the spray has not reached the in-spray combustible equivalence ratio and the fuel has not been ignited, amount increase correction is performed on an amount of fuel injection such that the equivalence ratio in the spray reaches the in-spray combustible equivalence ratio, and then the physical ignition delay period is calculated by the physical ignition delay period calculation means.

Similarly, it is determined whether or not an amount of evaporated fuel has reached a predetermined minimum necessary combustible vapor amount in a region where the equivalence ratio in the spray of the fuel injected from the fuel injection valve has reached the in-spray combustible equivalence ratio. If the amount of evaporated fuel has not reached the minimum necessary combustible vapor amount, amount increase correction is performed on the fuel injection amount such that the amount of evaporated fuel reaches the minimum necessary combustible vapor amount, and then the physical ignition delay period is calculated by the physical ignition delay period calculation means.

Thus, the physical ignition delay period and the chemical ignition delay period are calculated after it is ensured, by executing the amount increase correction for increasing the fuel injection amount, that the fuel spray can be reliably ignited. It is thereby possible to reliably achieve a state where the operation of estimating the physical ignition delay period and the operation of estimating the chemical ignition delay period according to the present invention can be executed.

The forms of fuel injection to which the present invention is applied include auxiliary injection that is performed prior to main injection. In other words, at least a main injection and an auxiliary injection that is performed prior to the main injection are able to be executed as fuel injection from the fuel injection valve toward the inside of the combustion chamber, and the total ignition delay period calculation means calculates the total ignition delay period of the fuel with respect to execution of the auxiliary injection.

Thus, the calculation of the total ignition delay period of the fuel injected in the auxiliary injection can help achievement of an appropriate ignition time of the auxiliary injection, and it is also possible to achieve an appropriate ignition time of the main injection performed after the auxiliary injection as the appropriate ignition time of the auxiliary injection is achieved. As a result, it is possible to achieve improvement of exhaust emission and prevention of combustion fluctuation and misfire at the time of combustion of the fuel injected in the main injection.

An ignition time control apparatus that controls the ignition time based on a total ignition delay period estimated as described above is also within the scope of the technical idea of the present invention. In other words, the ignition time control apparatus includes a combustion chamber internal temperature correction means that, the more the estimated total ignition delay period is longer than the target total ignition delay period, sets a higher temperature inside the combustion chamber by controlling a control parameter with which the temperature inside the combustion chamber can be adjusted.

The control parameter with which the temperature inside the combustion chamber can be adjusted includes the temperature of exhaust gas that is recirculated from an exhaust system to an intake system, and a temperature of the exhaust gas recirculated from the exhaust system to the intake system is set higher the more the estimated total ignition delay period is longer than the target total ignition delay period.

The control parameter with which the temperature inside the combustion chamber can be adjusted also includes a valve closing timing for an intake valve, and the valve closing timing for the intake valve is moved toward a bottom dead center side of a piston to set a higher actual compression ratio the more the estimated total ignition delay period is longer than the target total ignition delay period.

Also, the ignition time control apparatus includes a combustion chamber internal oxygen concentration correction means that, the more the estimated total ignition delay period is longer than the target total ignition delay period, sets a higher oxygen concentration inside the combustion chamber by controlling a control parameter with which the oxygen concentration inside the combustion chamber can be adjusted.

In this case, the control parameter with which the oxygen concentration inside the combustion chamber can be adjusted includes a recirculation amount of exhaust gas that is recirculated from an exhaust system to an intake system, and a recirculation amount of the exhaust gas recirculated from the exhaust system to the intake system is set smaller the more the estimated total ignition delay period is longer than the target total ignition delay period.

Effects of the Invention

According to the present invention, conditions that affect whether or not the air-fuel mixture in a combustion field is ignited are directly recognized to estimate an ignition delay period by estimating the air-fuel ignition delay period based on an equivalence ratio in a fuel spray, thereby improving the reliability of the ignition delay period estimation. Further, an appropriate ignition time can be achieved by controlling the ignition time based on the reliable result of estimation of the ignition delay period, and it is possible to achieve improvement of exhaust emission and the like.

Brief Description of Drawings

[FIG. 1] FIG. 1 is a schematic configuration diagram of an engine and a control system of the engine according to an embodiment.
[FIG. 2] FIG. 2 is a cross-sectional diagram showing a combustion chamber of a diesel engine and its surroundings.
[FIG. 3] FIG. 3 is a block diagram illustrating a configuration of a control system such as an ECU.
[FIG. 4] FIG. 4 is a diagram showing an EGR mode map.
[FIG. 5] FIG. 5 is a schematic diagram of intake and exhaust systems and the combustion chamber for illustrating the outline of the combustion forms within the combustion chamber.
[FIG. 6] FIG. 6 is a cross-sectional view showing the combustion chamber and its surroundings at the time of fuel injection.
[FIG. 7] FIG. 7 is a plan view of the combustion chamber at the time of fuel injection.
[FIG. 8] FIG. 8 is a flowchart illustrating a procedure of an operation of estimating a physical ignition delay period.
[FIG. 9] FIG. 9 is a diagram illustrating a change in an in-spray equivalence ratio after the start of pilot injection.
[FIG. 10] FIG. 10 is a diagram illustrating a map of minimum necessary amount of combustible vapor for obtaining a minimum necessary amount of combustible vapor.
[FIG. 11] FIG. 11 is a diagram illustrating a period after the start of pilot injection during which a combustible equivalence ratio is secured and the amount of evaporated fuel.
[FIG. 12] FIG. 12 shows a change in the in-spray equivalence ratio after the start of pilot injection, and shows a change in the in-spray equivalence ratio before the pilot injection amount is increased and a change in the in-spray equivalence ratio after the pilot injection amount is increased.
[FIG. 13] FIG. 13 is a flowchart illustrating a procedure of ignition time control including an operation of estimating a chemical ignition delay period.
[FIG. 14] FIG. 14 is a diagram illustrating the physical ignition delay period and the chemical ignition delay period after the execution of pilot injection.
[FIG. 15] FIG. 15 is a diagram showing a reference target ignition delay period map for finding a reference target ignition delay period using an engine speed and a fuel injection amount.

Mode for Carrying out the Invention

Embodiments of the invention are described below with reference to the drawings. In these embodiments, a case will be described in which the present invention is applied to a common rail in-cylinder direct injection multi-cylinder (for example, inline four-cylinder) diesel engine (compression self-ignition internal combustion engine) mounted in an automobile.

- Engine configuration -

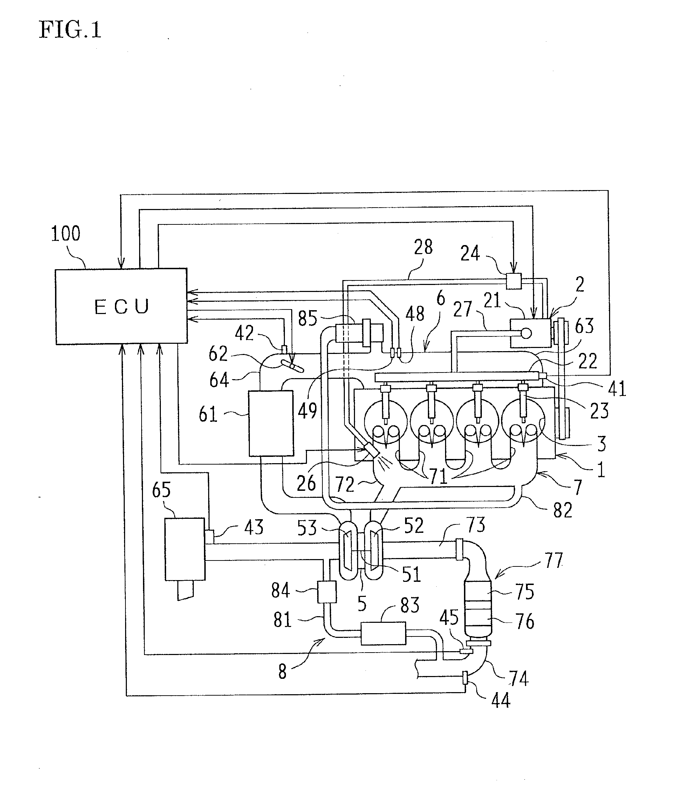

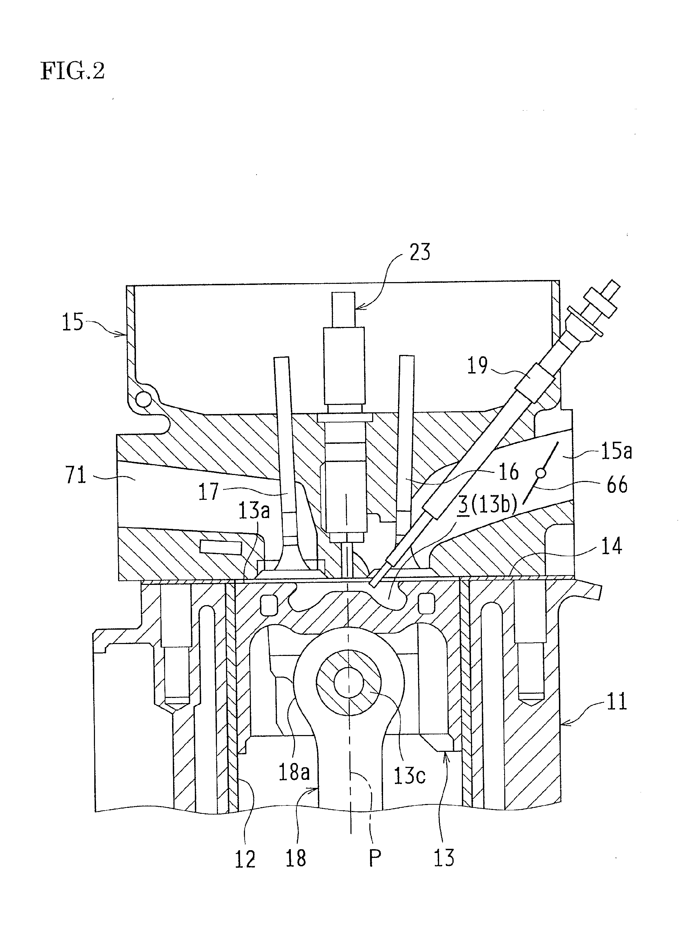

First, the overall configuration of a diesel engine (hereinafter simply referred to as the engine) according to the present embodiment will be described. FIG. 1 is a schematic configuration diagram of an engine 1 and a control system of the engine 1 according to the present embodiment. Also, FIG. 2 is a cross-sectional diagram showing combustion chambers 3 of the diesel engine and their surroundings.

As shown in FIG. 1, the engine 1 according to the present embodiment is configured as a diesel engine system having a fuel supply system 2, the combustion chambers 3, an intake system 6, an exhaust system 7, and the like as its main portions.

The fuel supply system 2 is configured including a supply pump 21, a common rail 22, injectors (fuel injection valves) 23, a cutoff valve 24, a fuel addition valve 26, an engine fuel path 27, an added fuel path 28, and the like.

The supply pump 21 draws fuel from a fuel tank, and after putting the drawn fuel under high pressure, supplies the fuel to the common rail 22 via the engine fuel path 27. The common rail 22 has the functionality of an accumulation chamber in which the high pressure fuel supplied from the supply pump 21 is held (accumulated) at a predetermined pressure, and this accumulated fuel is distributed to the injectors 23. The injectors 23 are configured from piezo injectors within which a piezoelectric element (piezo element) is provided, and that supplies fuel by injection into the combustion chambers 3 by appropriately opening a valve. Details of the control of fuel injection from the injectors 23 will be described later.

Also, the supply pump 21 supplies part of the fuel drawn from the fuel tank to the fuel addition valve 26 via the added fuel path 28. In the added fuel path 28, the cutoff valve 24 is provided in order to stop fuel addition by cutting off the added fuel path 28 during an emergency

The fuel addition valve 26 is configured from an electronically controlled opening/closing valve whose valve opening period is controlled by an addition control operation performed by an ECU 100, such that the amount of fuel added to the exhaust system 7 becomes a target addition amount (an addition amount such that exhaust A/F becomes a target A/F), and such that a fuel addition timing becomes a predetermined timing. In other words, a desired amount of fuel is supplied from the fuel addition valve 26 by injection to the exhaust system 7 (to an exhaust manifold 72 from exhaust ports 71) in accordance with appropriate timing.

The intake system 6 is provided with an intake manifold 63 connected to an intake port 15a formed in a cylinder head 15 (see FIG. 2), and an intake pipe 64 that constitutes an intake path is connected to the intake manifold 63. Also, in this intake path, an air cleaner 65, an air flow meter 43, and a throttle valve (intake throttle valve) 62 are disposed in the stated order from the upstream side. The air flow meter 43 outputs an electrical signal according to the amount of air that flows into the intake path via the air cleaner 65.

Also, in the intake system 6, a swirl control valve (variable swirl velocity mechanism) 66 is provided in order to vary swirl flow (horizontal swirl flow) in the combustion chambers 3 (see FIG. 2). Specifically, each cylinder is provided with two ports, namely a normal port and a swirl port, as the intake port 15a, and the swirl control valve 66, which is constituted by a butterfly valve whose opening degree is adjustable, is disposed in the normal port 15a shown in FIG. 2. The swirl control valve 66 is linked to an actuator (not shown), and the flow rate of air passing through the normal port 15a can be changed according to the opening degree of the swirl control valve 66, which is adjusted by driving of the actuator. The greater the opening degree of the swirl control valve 66, the greater the amount of air that flows from the normal port 15a into the cylinder. For this reason, swirl generated by the swirl port (not shown in FIG. 2) becomes relatively weak, and a low swirl condition (a condition in which the swirl velocity is low) is achieved in the cylinder. On the contrary, the smaller the opening degree of the swirl control valve 66, the lower the amount of air that flows from the normal port 15a into the cylinder. For this reason, swirl generated by the swirl port becomes relatively strong, and a high swirl condition (a condition in which the swirl velocity is high) is achieved in the cylinder.

The exhaust system 7 is provided with the exhaust manifold 72 connected to the exhaust ports 71 formed in the cylinder head 15, and exhaust pipes 73 and 74 that constitute an exhaust path are connected to the exhaust manifold 72. Also, in this exhaust path, a maniverter (exhaust purification apparatus) 77 is disposed that is provided with a NOx storage catalyst (NSR catalyst: NOx Storage Reduction catalyst) 75 and a DPNR catalyst (Diesel Particulate-NOx Reduction catalyst) 76. The following describes the NSR catalyst 75 and the DPNR catalyst 76.

The NSR catalyst 75 is a storage reduction NOx catalyst and is composed using, for example, alumina ($Al_2O_3$) as a support, with, for example, an alkali metal such as potassium (K), sodium (Na), lithium (Li), or cesium (Cs), an alkaline earth element such as barium (Ba) or calcium (Ca), a rare earth element such as lanthanum (La) or yttrium (Y), and a precious metal such as platinum (Pt) supported on this support.

In a state in which a large amount of oxygen is present in exhaust gas, the NSR catalyst 75 stores NOx, and in a state in which the oxygen concentration in exhaust gas is low, and furthermore a large amount of reduction component (e.g., an unburned component of fuel (HC)) is present, the NSR catalyst 75 reduces NOx to $NO_2$ or NO and releases the resulting $NO_2$ or NO. NOx that has been released as $NO_2$ or NO is further reduced due to quickly reacting with HC or CO in exhaust gas and becomes $N_2$. Also, by reducing $NO_2$ or NO, HC and CO themselves are oxidized and thus become $H_2O$ and $CO_2$. In other words, by suitably adjusting the oxygen concentration or the HC component in exhaust gas introduced into the NSR catalyst 75, it is possible to purify HC, CO, and NOx in the exhaust gas. In the configuration of the present embodiment, adjustment of the oxygen concentration or the HC component in exhaust gas can be performed with an operation for adding fuel from the fuel addition valve 26.

On the other hand, in the DPNR catalyst 76, a NOx storage reduction catalyst is supported on a porous ceramic structure, for example, and PM in exhaust gas is captured while passing through a porous wall. When the air-fuel ratio of the exhaust gas is lean, NOx in the exhaust gas is stored in the NOx storage reduction catalyst, and when the air-fuel ratio is rich, the stored NOx is reduced and released. Furthermore, a catalyst that oxidizes/burns the captured PM (e.g., an oxidization catalyst whose main component is a precious metal such as platinum) is supported on the DPNR catalyst 76.

The following describes the configuration of the combustion chamber 3 of the diesel engine and its surroundings with reference to FIG. 2. As shown in FIG. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide vertically.

The combustion chamber 3 is formed on the top side of a top face 13a of the piston 13. In other words, the combustion chamber 3 is defined by a lower face of the cylinder head 15 installed on top of the cylinder block 11 via a gasket 14, an inner wall face of the cylinder bore 12, and the top face 13a of the piston 13. A cavity (recess) 13b is provided in substantially the center of the top face 13a of the piston 13, and this cavity 13b also constitutes part of the combustion chamber 3.

Note that the cavity 13b is shaped such that the dimensions of the recess are small in the center portion (on a cylinder centerline P) and increase toward the outer peripheral side. In other words, when the piston 13 is near compression top dead center as shown in FIG. 2, the space in the combustion chamber 3 formed by the cavity 13b is small with a relatively low volume in the center portion, and gradually increases toward to the outer peripheral side (becomes large).

A small end 18a of a connecting rod 18 is linked to the piston 13 by a piston pin 13c, and a large end of the connecting rod 18 is linked to a crankshaft that is an engine output shaft. Thus, back and forth movement of the piston 13 within the cylinder bore 12 is transmitted to the crankshaft via the connecting rod 18, and engine output is obtained due to rotation of this crankshaft. Also, a glow plug 19 is disposed facing the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

Disposed in the cylinder head 15 are the intake port 15a that introduces air into the combustion chamber 3 and the exhaust port 71 that discharges exhaust gas from the combustion chamber 3, as well as an intake valve 16 that opens/closes the intake port 15a and an exhaust valve 17 that opens/closes the exhaust port 71. The intake valve 16 and the exhaust valve 17 are disposed facing each other on either side of the cylinder centerline P. That is, this engine 1 is configured as a cross flow-type engine. Also, the injector 23 that injects fuel directly into the combustion chamber 3 is installed in the cylinder head 15. The injector 23 is disposed substantially in the center above the combustion chamber 3, in an erect orientation along the cylinder centerline P, and injects fuel introduced from the common rail 22 toward the combustion chamber 3 in accordance with a predetermined timing.

Furthermore, as shown in FIG. 1, the engine 1 is provided with a turbocharger 5. This turbocharger 5 is provided with a turbine wheel 52 and a compressor wheel 53 that are linked via a turbine shaft 51. The compressor wheel 53 is disposed facing the inside of the intake pipe 64, and the turbine wheel 52 is disposed facing the inside of the exhaust pipe 73. Thus the turbocharger 5 uses exhaust flow (exhaust pressure) received by the turbine wheel 52 to rotate the compressor wheel 53, thereby performing a so-called supercharging operation that increases the intake pressure. In the present embodiment, the turbocharger 5 is a variable nozzle-type turbocharger, in which a variable nozzle vane mechanism (not shown) is provided on the turbine wheel 52 side, and by adjusting the opening degree of this variable nozzle vane mechanism it is possible to adjust the supercharging pressure of the engine 1.

An intercooler 61 for forcibly cooling intake air heated due to supercharging with the turbocharger 5 is provided in the intake pipe 64 of the intake system 6.

The throttle valve 62 provided on the downstream side from the intercooler 61 is an electronically controlled opening/closing valve whose opening degree can be steplessly adjusted, and has a function of constricting the area of the channel of intake air under a predetermined condition, and thus adjust (reduce) the amount of intake air supplied.

Also, the engine 1 is provided with an exhaust recirculation apparatus 8 for reducing the amount of NOx generated by connecting the intake system 6 to the exhaust system 7 and recirculating part of exhaust gas from the exhaust system 7 to the intake system 6 to reduce the combustion temperature. The exhaust recirculation apparatus 8 is provided with a low-pressure EGR path 81 that connects the exhaust pipe 74 on the downstream side of the maniverter 77, that is, on the downstream side of the turbine wheel 52 to the intake pipe 64 on the upstream side of the compressor wheel 53, and with a high-pressure EGR path 82 that connects the exhaust path (for example, the exhaust manifold 72) on the upstream side of the turbine wheel 52 to the intake pipe 64 on the downstream side of the intercooler 61, that is, on the downstream side of the compressor wheel 53. The low-pressure EGR path 81 is provided with an EGR cooler 83 for cooling exhaust gas and a low-pressure EGR valve 84 for adjusting the flow rate of exhaust gas (which may hereinafter be referred to also as low-pressure EGR gas) that is recirculated to the intake pipe 64 via the low-pressure EGR path 81. On the other hand, the high-pressure EGR path 82 is provided with a high-pressure EGR valve 85 for adjusting the flow rate of exhaust gas (which may hereinafter be referred to also as high-pressure EGR gas) that is recirculated to the intake pipe 64 via the high-pressure EGR path 82. Note that the low-pressure EGR gas and high-pressure EGR gas are hereinafter referred to simply as EGR gas when there is no particular need to distinguish between them.

Also, the valve system of the engine 1 is provided with a VVT (Variable Valve Timing) mechanism, which enables the timing of opening/closing the intake valve 16 to be adjusted. The configuration of the VVT mechanism is well-known (for example, see JP 2010-116816A and JP 2010-180748A), and the description thereof is omitted here.

- Sensors -

Various sensors are installed at respective sites of the engine 1, and these sensors output signals related to environmental conditions at the respective sites and the operating state of the engine 1.

For example, the air flow meter 43 outputs a detection signal according to the flow rate of intake air (the amount of intake air) on the upstream side of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that changes in a continuous manner according to the oxygen concentration in exhaust gas on the downstream side of the maniverter 77 of the exhaust system 7. An exhaust temperature sensor 45 likewise outputs a detection signal according to the temperature of exhaust gas (exhaust temperature) on the downstream side of the maniverter 77 of the exhaust system 7. A rail pressure sensor 41 outputs a detection signal according to the pressure of fuel accumulated in the common rail 22. A throttle opening degree sensor 42 detects the opening degree of the throttle valve 62.

-ECU-

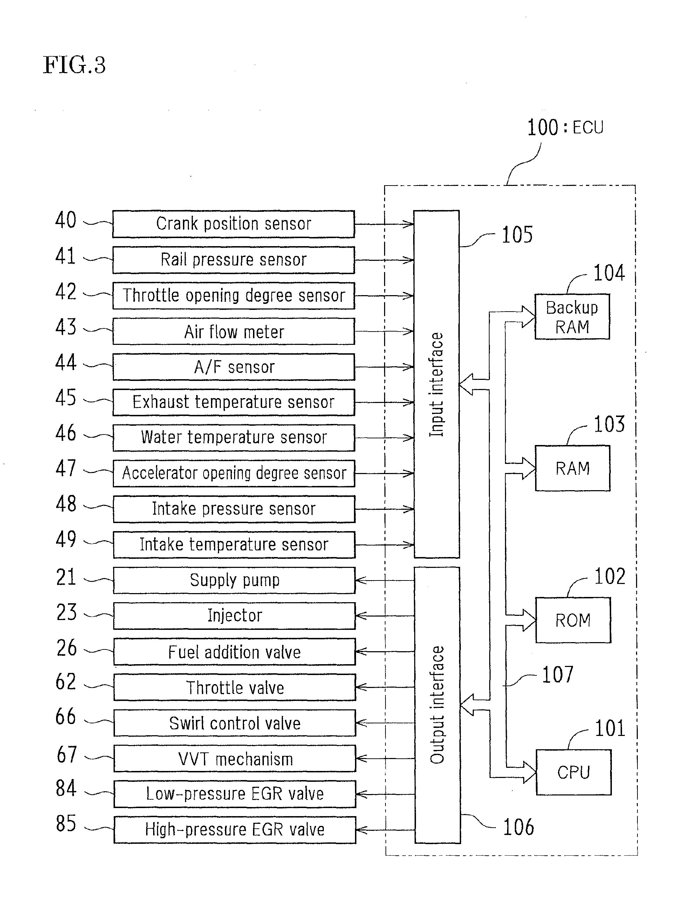

As shown in FIG. 3, the ECU 100 is provided with a CPU 101, a ROM 102, a RAM 103, a backup RAM 104, and the like. Stored in the ROM 102 are various control programs, maps that are referenced when executing those various control programs, and the like. The CPU 101 executes various types of arithmetic processing based on the various control programs and maps stored in the ROM 102. The RAM 103 is a memory that temporarily stores data or the like resulting from computation with the CPU 101 or data that has been input from the respective sensors. The backup RAM 104 is a nonvolatile memory that stores that data or the like to be saved when the engine 1 is stopped, for example.

The CPU 101, the ROM 102, the RAM 103, and the backup RAM 104 are connected to each other via a bus 107, and are connected to an input interface 105 and an output interface 106 via the bus 107.

The input interface 105 is connected to the rail pressure sensor 41, the throttle opening degree sensor 42, the air flow meter 43, the A/F sensor 44, the exhaust temperature sensor 45, the intake pressure sensor 48, and the intake temperature sensor 49. Furthermore, the input interface 105 is connected to a water temperature sensor 46 that outputs a detection signal according to the coolant temperature of the engine 1, an accelerator opening degree sensor 47 that outputs a detection signal according to the amount of accelerator pedal depression, a crank position sensor 40 that outputs a detection signal (pulse) each time the output shaft (crankshaft) of the engine 1 rotates a specific angle, and the like.

On the other hand, the supply pump 21, the injector 23, the fuel addition valve 26, the throttle valve 62, the swirl control valve 66, the low-pressure EGR valve 84, the high-pressure EGR valve 85, the VVT mechanism 67, and the like are connected to the output interface 106. In addition, an actuator (not shown in the drawings) provided in the variable nozzle vane mechanism of the turbocharger 5 is connected to the output interface 106.

The ECU 100 executes various controls of the engine 1 based on outputs from the various sensors, calculated values obtained by arithmetic expressions that use the output values, or various maps stored in the ROM 102.

For example, the ECU 100 executes a pilot injection (auxiliary injection) and a main injection as a fuel injection control of the injector 23.

The pilot injection is an operation of injecting a small amount of fuel in advance, prior to the main injection from the injector 23. Also, the pilot injection is an injection operation for suppressing a fuel ignition delay by the main injection, thereby leading to a stable diffusion combustion, which is also referred to as an auxiliary injection. Also, the pilot injection of the present embodiment has, in addition to a function to suppress the initial combustion speed by the aforementioned main injection, a preheating function to increase the internal temperature of the cylinder. That is, after executing the pilot injection, fuel injection is suspended, and the temperature of the compressed gas (the temperature in the cylinder) is sufficiently increased before the main injection is started such that the self-ignition temperature of the fuel (for example, 1000 K) is reached, thereby securing favorable ignition of fuel sprayed in the main injection.

The main injection is an injection operation for generating a torque to the engine 1 (operation for supplying fuel for generating torque). The fuel injection amount in this main injection is determined, basically, such that the required torque is obtained according to the operation states, such as the engine speed, the amount of accelerator operation, the coolant temperature, and the intake air temperature. For example, the greater the engine speed is (the engine speed calculated based on the value detected by the crank position sensor 40) or the greater the amount of accelerator operation (the amount of accelerator pedal depression detected by the accelerator opening degree sensor 47) is (i.e., the greater the accelerator opening degree is), the greater the resulting torque requirement value of the engine 1 is. Accordingly, the fuel injection amount in the main injection is set to a larger amount.

Note that other than the pilot injection and the main injection described above, an after-injection or a post-injection is executed as necessary The after-injection is an injection operation for increasing the exhaust gas temperature. Specifically, the after-injection is executed at a timing at which majority of the combustion energy of supplied fuel is obtained as exhaust heat energy instead of being converted into a torque of the engine 1. Also, the post-injection is an injection operation for increasing the temperature of the maniverter 77 by directly introducing fuel into the exhaust system 7. For example, when the amount of PM captured by and deposited in the DPNR catalyst 76 has exceeded a specific amount (for example, indicated from detection of a before/after pressure difference of the maniverter 77), the post-injection is executed.

Also, the ECU 100 controls the opening degree of the EGR valves 84 and 85 provided in the exhaust recirculation apparatus 8 according to the operation state of the engine 1, and adjusts the amount of exhaust gas recirculated towards the intake system (EGR gas amount). Specifically, in the engine 1 according to the present embodiment, a plurality of EGR modes for recirculating exhaust gas from the exhaust system to the intake system are set in accordance with the operation states of the engine 1. As the EGR modes, a low pressure loop (LPL) mode that serves as a low-pressure EGR mode in which exhaust gas is recirculated to the intake pipe 64 only via the low-pressure EGR path 81, a high pressure loop (HPL) loop that serves as a high-pressure EGR mode in which exhaust gas is recirculated to the intake pipe 64 only via the high-pressure EGR path 82, and an MPL mode that serves as a mixed EGR mode in which exhaust gas is recirculated to the intake pipe 64 via both EGR paths, namely the low-pressure EGR path 81 and the high-pressure EGR path 82.

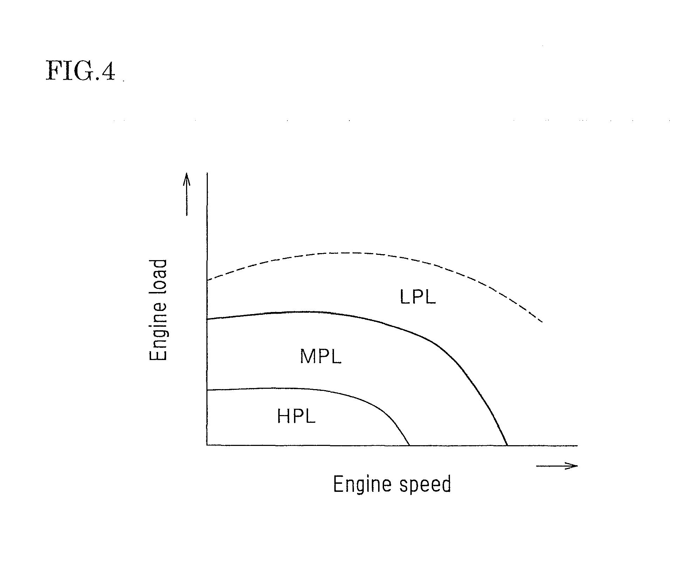

FIG. 4 is an EGR mode map showing an exemplary correspondence relationship between each of these EGR modes and the operation state of the engine 1. The ECU 100 references this EGR mode map when recirculating exhaust gas to the intake pipe 64, and selects any of the EGR modes, namely the LPL mode, the MPL mode, or the HPL mode, according to the engine speed and engine load. Also, the ECU 100 switches the EGR mode in accordance with change in the operation state of the engine 1. Note that the LPL mode is executed by the high-pressure EGR valve 85 being kept fully closed and by the opening degree of the low-pressure EGR valve 84 being adjusted. The HPL mode is executed by the low-pressure EGR valve 84 being kept fully closed and by the opening degree of the high-pressure EGR valve 85 being adjusted. The MPL mode is executed by the opening degree of both the low-pressure EGR valve 84 and the high-pressure EGR valve 85 being adjusted. The respective opening degrees of the low-pressure EGR valve 84 and the high-pressure EGR valve 85 in each of these EGR modes are adjusted to an appropriate value by the ECU 100 in accordance with the operation states of the engine 1. Note that the EGR mode map is created in advance based on experiments, simulations, or the like.

The ECU 100 furthermore executes opening degree control on the swirl control valve 66. The opening degree control executed on the swirl control valve 66 is performed so as to change the amount of circumferential movement in a cylinder per unit time (or per unit of crank rotation angle) of a spray of fuel injected into the combustion chamber 3.

- Fuel injection pressure -

The fuel injection pressure when executing the fuel injection is determined based on the internal pressure of the common rail 22. In regard to the internal pressure of the common rail, normally, the higher the engine load is and the greater the engine speed is, the greater the target value for the pressure of fuel supplied from the common rail 22 to the injectors 23 (i.e., the target rail pressure) is. In other words, when the engine load is high, a large amount of air is drawn into the combustion chamber 3, making it necessary to inject a large amount of fuel into the combustion chamber 3 from the injectors 23, and therefore the pressure of injection from the injectors 23 needs to be high. Also, when the engine speed is high, the period during which injection is possible is short, making it necessary to inject a large amount of fuel per unit time, and therefore the pressure of injection from the injectors 23 needs to be high. In this way, the target rail pressure is normally set based on the engine load and the engine speed. Note that the target rail pressure is set in accordance with, for example, a fuel pressure setting map stored in the ROM 102. Specifically, the valve opening period (injection rate waveform) of the injectors 23 is controlled through determining the fuel pressure according to this fuel pressure setting map, thus enabling the amount of fuel injected during the valve opening period to be specified.

Note that in the present embodiment, the fuel pressure is adjusted between 30 MPa and 200 MPa according to the engine load or the like.

The optimal values of fuel injection parameters for the pilot injection, the main injections and the like differ depending on the temperature conditions of the engine 1, intake air, and the like.

For example, the ECU 100 adjusts the amount of fuel discharged by the supply pump 21 such that the common rail pressure is equal to the target rail pressure set based on the operation state of the engine, that is, such that the fuel injection pressure matches the target injection pressure. Also, the ECU 100 determines the fuel injection amount and the fuel injection form based on the operation state of the engine. Specifically, the ECU 100 calculates an engine rotational speed based on the value detected by the crank position sensor 40, obtains the amount of accelerator pedal depression (accelerator opening degree) based on the value detected by the accelerator opening degree sensor 47, and determines the total fuel injection amount (a sum of injection amounts in the pilot injection and the main injection) based on the engine rotational speed and the accelerator opening degree.

- Brief description of combustion forms -

Next is a brief description of forms of combustion within the combustion chamber 3 of the engine 1 according to the present embodiment.

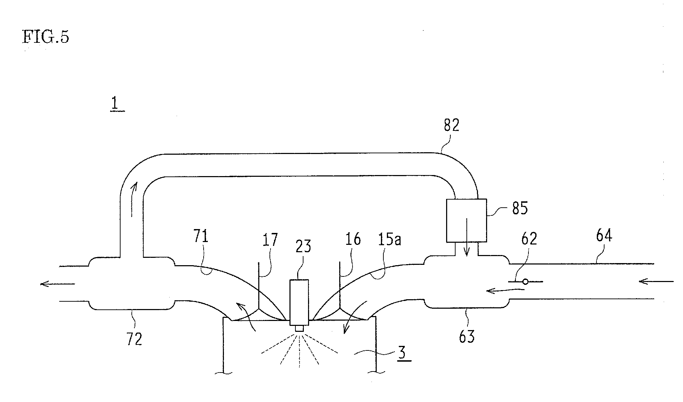

FIG. 5 schematically shows a state in which gas (air) is drawn into one of the cylinders of the engine 1 through the intake manifold 63 and the intake port 15a, combustion is performed by fuel injection from the injector 23 into the combustion chamber 3, and the combusted gas is discharged to the exhaust manifold 72 through the exhaust ports 71.

As shown in FIG. 5, gas drawn into the cylinder contains fresh air drawn in from the intake pipe 64 via the throttle valve 62, and EGR gas drawn in from the EGR paths (FIG. 5 shows only the high-pressure EGR path 82) when the aforementioned EGR valve (FIG. 5 shows only the high-pressure EGR valve 85) opens. The ratio of the amount of EGR gas to the sum of the amount (mass) of fresh air drawn in and the amount (mass) of EGR gas drawn in (that is, EGR ratio) changes according to the opening degree of the EGR valve (for example, the high-pressure EGR valve 85) that is appropriately controlled by the ECU 100 according to the operation state.

Fresh air and EGR gas drawn into the cylinder in this manner are drawn into the cylinder along with the lowering of the piston 13 (not shown in FIG. 5) via the intake valve 16 that opens in the intake stroke, and become in-cylinder gas. This in-cylinder gas is sealed in the cylinder as a result of the intake valve 16 being closed at a valve closure time that is determined according to the operation state of the engine 1 (achieving a state in which the in-cylinder gas is sealed), and thereafter, compressed in the compression stroke along with the rising of the piston 13. Then, when the piston 13 has reached near the top dead center, the injector 23 opens for a predetermined period of time through the above-described injection amount control performed by the ECU 100 such that fuel is directly injected into the combustion chamber 3. Specifically, the pilot injection is executed before the piston 13 reaches the top dead center, and after the fuel injection is suspended, the main injection is executed at a point in time at which the piston 13 has reached near the top dead center after a predetermined interval.

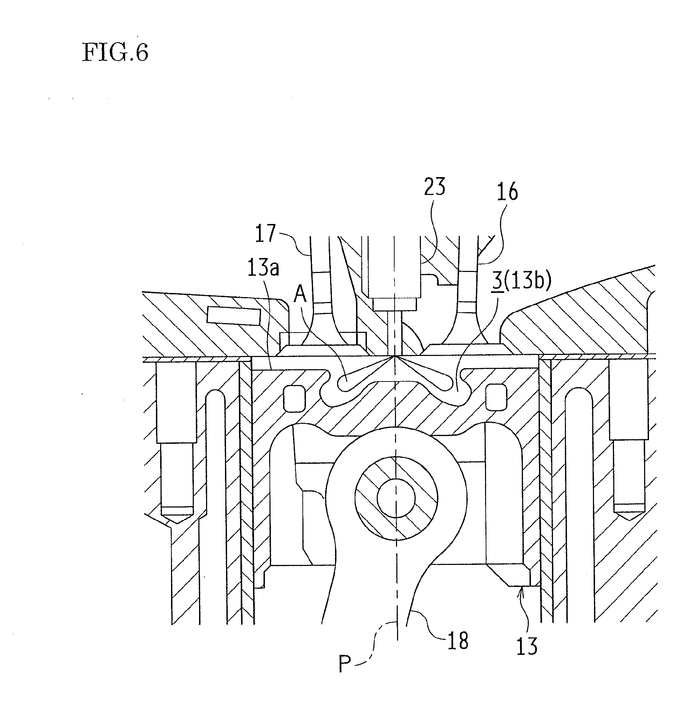

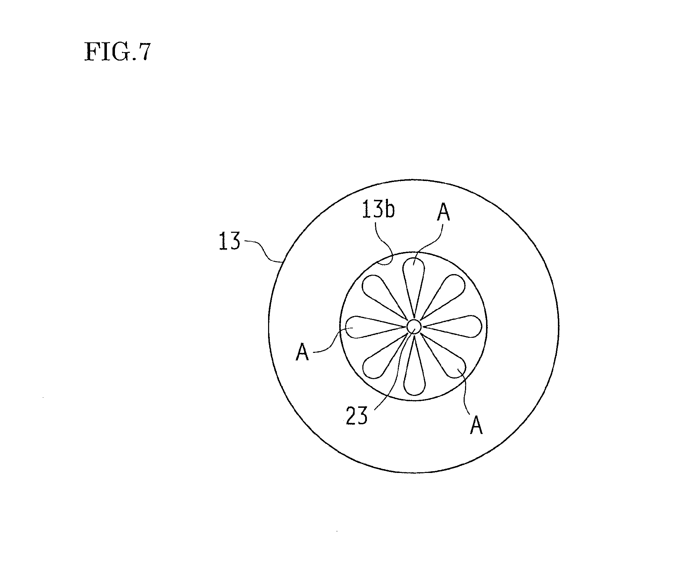

FIG. 6 is a cross-sectional view of the combustion chamber 3 and its surroundings at the time of this fuel injection, and FIG. 7 is a plan view of the combustion chamber 3 (diagram showing the top face of the piston 13) at the time of this fuel injection. As shown in FIG. 7, eight nozzles are provided in the injector 23 of the engine 1 according to the present embodiment at equal intervals in the circumferential direction such that fuel is equally injected from these nozzles. Note that the number of the nozzles is not limited to eight.

Each spray A of fuel injected from the nozzles is diffused substantially conically Also, since the fuel injection (the pilot injection or the main injection) from the nozzles is performed at a point in time at which the piston 13 has reached near the compression top dead center, each spray A of fuel is diffused in the cavity 13b, as shown in FIG. 6.

In this manner, each spray A of fuel injected from the nozzles formed in the injector 23 is mixed with the in-cylinder gas with the lapse of time so as to form an air-fuel mixture, which is diffused conically inside the cylinder, and undergoes combustion by self-ignition. That is, each fuel spray A forms a substantially conical combustion field with the in-cylinder gas, and combustion starts in each of the combustion fields (eight combustion fields in the present embodiment).

The energy generated by this combustion serves as kinetic energy for pushing down the piston 13 toward the bottom dead center (energy to serve as engine output), heat energy for increasing the temperature inside the combustion chamber 3, or heat energy radiated to the outside (for example, to the coolant) via the cylinder block 11 or the cylinder head 15.

The combusted in-cylinder gas is discharged to the exhaust ports 71 and the exhaust manifold 72 along with the rising of the piston 13 via the exhaust valve 17 that opens in the discharge stroke, and becomes exhaust gas.

-Ignition delay period estimation and ignition time control-

A feature of the present embodiment lies in the operation of estimating a delay period of ignition of the air-fuel mixture generated by the fuel injected in the pilot injection, and in the operation of controlling an ignition time by achieving an appropriate ignition delay period based on the estimated ignition delay period. Specifically, ignition delay of air-fuel mixture includes physical ignition delay and chemical ignition delay. The physical ignition delay is a period of time required for evaporation/mixture of fuel droplets. On the other hand, the chemical ignition delay is a period of time required for chemical bonding/decomposition and exothermic oxidation of fuel vapor. In the present embodiment, the physical ignition delay period and chemical ignition delay period are each calculated with high accuracy, and the control parameters for the engine 1 are controlled such that a "total ignition delay period" obtained based on these ignition delay periods becomes an appropriate ignition delay period (hereinafter referred to as a "target ignition delay period" in some cases) (the method for setting of this "target ignition delay period" will be described later).

In the description provided below, the operation of estimating the physical ignition delay period, the operation of estimating the chemical ignition delay period, the operation of calculating the total ignition delay period, and the operation of controlling the control parameter for matching the total ignition delay period to the target ignition delay period will be described in order.

-Operation of estimating physical ignition delay period-

First, an outline of the operation of estimating the physical ignition delay period will be described. The physical ignition delay occurs during a period from a point in time at which a pilot injection is started, until a point in time at which, after the equivalence ratio in spray of fuel injected in that pilot injection (hereinafter referred to as an "in-spray equivalence ratio") has reached a value at which ignition is possible (hereinafter referred to as an "in-spray combustible equivalence ratio"), and the amount of combustible vapor in that spray (hereinafter referred to as an "amount of in-spray combustible vapor") has reached a value at which ignition is possible (hereinafter referred to as a "minimum necessary amount of combustible vapor") such that ignition has started, the in-spray equivalence ratio has dropped to the in-spray combustible equivalence ratio or less. That is, a period from when the pilot injection is started to when the in-spray equivalence ratio drops to the in-spray combustible equivalence ratio or less is obtained as the physical ignition delay period (the operation of calculating the physical ignition delay period by a physical ignition delay period calculation means).

Note that the above-described "amount of in-spray combustible vapor" refers to the volume of the region where the equivalence ratio is higher than the "in-spray combustible equivalence ratio" in fuel spray.

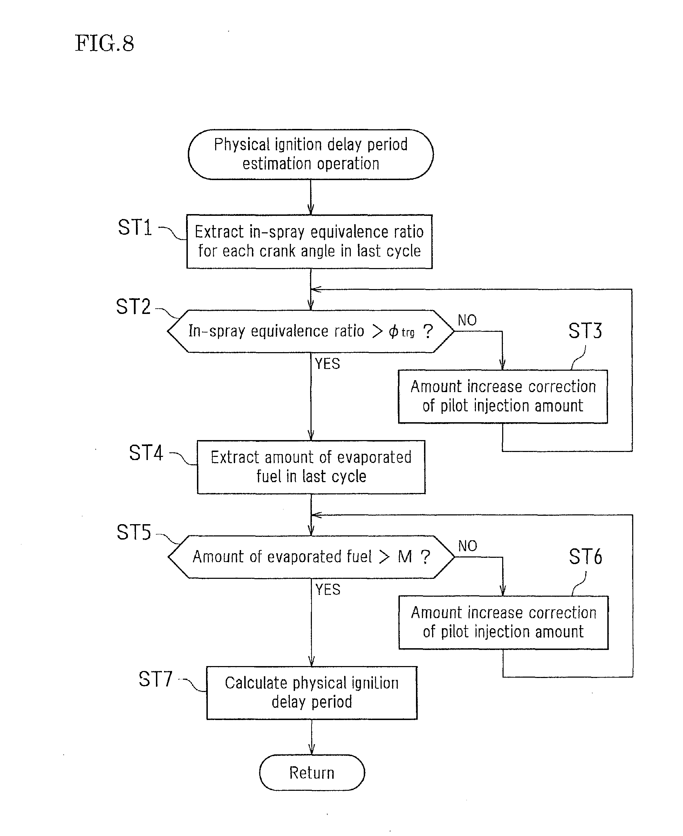

A specific description of this operation of estimating the physical ignition delay period according to the present embodiment will be provided below. FIG. 8 is a flowchart illustrating a procedure of this operation of estimating physical ignition delay period. This flowchart is repeatedly executed every predetermined period of time (for example, several msecs) after the engine 1 is started.

First, in step ST1, the in-spray equivalence ratio for each crank angle in the last cycle is extracted. This is performed by extracting the in-spray equivalence ratios that have been calculated for each of the crank angles for a predetermined period after execution of the pilot injection in a cylinder that reached the combustion stroke immediately prior to the cylinder that will subsequently undergo the combustion stroke (for example, a period after start of the pilot injection until start of the main injection), and have been stored in the RAM 103. Note that the in-spray equivalence ratios for each of the crank angles obtained for a predetermined period after execution of the pilot injection at the immediately previous combustion stroke of the cylinder that will subsequently undergo the combustion stroke (at the immediately previous combustion stroke of the same cylinder) may be extracted.

As a specific operation of calculating the in-spray equivalence ratio, the in-spray equivalence ratio is calculated by dividing the amount of fuel in each spray by its volume, and the volume of each spray is calculated by the following Equations (1) to (4) for every predetermined crank rotation angle (for example, every 1°CA in terms of the crank rotation angle). The value for the spray volume calculation interval is not limited to this. Equations (1) and (2) are computation formulae for obtaining a spray length $L_{sp}$ of fuel injected in the pilot injection, and are known as "Hiroyasu's equations". Note that Equation (1) is a computation formula for obtaining the spray length $L_{sp}$ for a period until an elapsed time t since the start of fuel injection reaches a droplet breakup time $t_e$, and Equation (2) is a computation formula for obtaining the spray length $L_{sp}$ for a period after the elapsed time t since the start of fuel injection has exceeded the droplet breakup time $t_e$. Also, Equation (3) is a computation formula for obtaining a spray angle $\theta_{sp}$ of fuel injected in the pilot injection. Also, Equation (4) is a computation formula for obtaining a spray volume $V_{sp}$.

[Expression 1]

$$L_{sp} = \begin{cases} 0.39\left(2\Delta P/\rho_f\right)^{\frac{1}{2}} \cdot t & \left(0 \le t \le t_e\right) \ \cdots (1) \\ 2.95\left(\Delta P/\rho_a\right)^{0.25} \cdot \left(d_0 t\right)^{\frac{1}{2}} & \left(t > t_e\right) \quad \cdots (2) \end{cases}$$

$\Delta P$:    Pressure difference between injection pressure and ambient pressure
$t_e$:    Droplet breakup time
$\rho_f$:    Fuel density
$\rho_a$:    Atmosphere gas density
$d_0$:    injector nozzle diameter

[Expression 2]

$$\theta_{sp} = 0.05\left(\frac{\rho_a \cdot \Delta P \cdot d_o^{\,2}}{\mu_a^{\,2}}\right) \quad \cdots (3)$$

$\mu_a$: Viscosity coefficient of air

$$V_{sp} = 1/3\,\pi L_{sp}^{\,3}\tan^2\!\left(\theta_{sp}\right) \quad \cdots (4)$$

The in-spray equivalence ratio for each crank angle (an equivalence ratio obtained assuming that the in-spray equivalence ratio is uniform) is calculated by dividing the fuel amount in a spray (a fuel amount injected from a single nozzle, that is, a value obtained by dividing the total pilot injection amount by the number of nozzles) by the spray volume $V_{sp}$ calculated for each crank angle in this manner (a volume of fuel injected from a single nozzle), and values obtained in this manner are stored in the RAM 103. In step ST1, data of the in-spray equivalence ratio for each crank angle is extracted.

After the in-spray equivalence ratio for each crank angle obtained in the last cycle has been extracted in this manner, the procedure proceeds to step ST2, and it is determined whether, among these information pieces of in-spray equivalence ratio, there is information whose value exceeds an in-spray combustible equivalence ratio $\varphi_{trg}$. The in-spray combustible equivalence ratio $\varphi_{trg}$ is set such that if the equivalence ratio in a spray of fuel injected in a pilot injection has exceeded the in-spray combustible equivalence ratio $\varphi_{trg}$, ignition of air-fuel mixture of fuel injected in that pilot injection becomes possible, and is set to "0.7", for example. The in-spray combustible equivalence ratio $\varphi_{trg}$ is not limited to this value, and can be experimentally set according to fuel properties (e.g., cetane number), or the like.

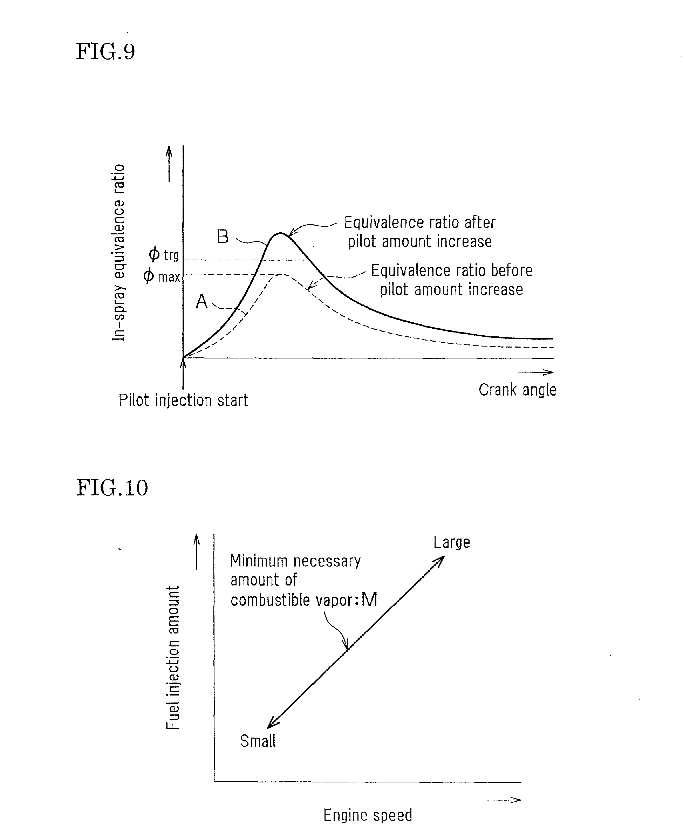

FIG. 9 is a diagram illustrating a change in the in-spray equivalence ratio after start of the pilot injection. As shown in FIG. 9, after start of the pilot injection, a fuel spray diffuses within the combustion chamber 3, and fuel droplets present in the spray gradually evaporate. Immediately after injection of fuel, fuel droplets that have not been contributing to the in-spray equivalence ratio evaporate, and accordingly the in-spray equivalence ratio rapidly increases. After that, the in-spray equivalence ratio decreases along with decreasing of the fuel evaporation rate and expansion of the spray volume (diffusion of sprays). Accordingly, the value of the in-spray equivalence ratio is the highest at the timing when the value switches from increasing to decreasing.

The waveform A indicated by the dashed line in FIG. 9 shows an example of change in the in-spray equivalence ratio in the case where no in-spray equivalence ratio obtained for each crank angle in the last cycle exceeds the in-spray combustible equivalence ratio $\varphi_{trg}$. Also, the waveform B indicated by the solid line in FIG. 9 shows an example of change in the in-spray equivalence ratio in the case where any of the in-spray equivalence ratios obtained for each crank angle in the last cycle exceeds the in-spray combustible equivalence ratio $\varphi_{trg}$.

If any of the in-spray equivalence ratios obtained for each crank angle in the last cycle exceeds the in-spray combustible equivalence ratio $\varphi_{trg}$ (see the waveform B in FIG. 9), and the determination result in step ST2 is "YES", then, the procedure proceeds to step ST4.

On the other hand, if all of the in-spray equivalence ratios obtained for each crank angle in the last cycle are less than or equal to the in-spray combustible equivalence ratio $\varphi_{trg}$ (see the waveform A in FIG. 9), and the determination result in step ST2 is "NO", then, the procedure proceeds to step ST3 where amount increase correction is performed on the pilot injection amount in fuel injection performed in the current cycle. As a specific operation of the amount increase correction of the pilot injection amount, the period of the pilot injection is extended. As an amount of this amount increase correction (a period by which the pilot injection period is extended), the highest value of the in-spray equivalence ratio among the in-spray equivalence ratios obtained for each crank angle in the last cycle (hereinafter referred to as a "maximum in-spray equivalence ratio", which corresponds to "$\varphi_{max}$" in FIG. 9) is compared with the in-spray combustible equivalence ratio $\varphi_{trg}$, and the amount of the amount increase correction is set depending on the deviation therefrom. That is, the greater the deviation (the lower the maximum in-spray equivalence ratio $\varphi_{max}$ is relative to the in-spray combustible equivalence ratio $\varphi_{trg}$) is, the greater the value is set as the amount of the amount increase correction. When amount increase correction is performed on the pilot injection amount in this manner, some of the in-spray equivalence ratios obtained for each crank angle exceed the in-spray combustible equivalence ratio $\varphi_{trg}$ (this results in a change in the in-spray equivalence ratio shown by the waveform B in FIG. 9, for example), and then the determination result in step ST2 is "YES".

In step ST4, an amount of evaporated fuel (amount of in-spray combustible vapor) in the last cycle is extracted.

This is performed by extracting an amount of evaporated fuel that has been calculated for a predetermined period after execution of the pilot injection in a cylinder that reached the combustion stroke immediately prior to the cylinder that will subsequently undergo the combustion stroke (for example, a period after start of the pilot injection until start of the main injection), and has been stored in the RAM 103. Note that an amount of evaporated fuel that has been obtained for a predetermined period after execution of the pilot injection at the immediately previous combustion stroke of the cylinder that will subsequently undergo the combustion stroke (at the immediately previous combustion stroke of the same cylinder) may be extracted.

As a specific operation of calculating the amount of evaporated fuel (fuel vapor amount), Equations (5) to (8) indicated below are used for calculation.

Specifically, through experiments of the engine 1 with a performance testing apparatus, a fuel evaporation rate ($dm_v/dt$) is calculated using Equations (5) to (7) indicated below for each crank angle (for example, every advance by 1°CA in the crank angle) of the engine 1 in the combustion stroke.

Alternatively, a steady-state fuel evaporation rate map may be created by mapping the calculated fuel evaporation rates for the crank angles, and the fuel evaporation rate for each crank angle may be calculated by multiplying the steady-state fuel evaporation rate map by correction coefficients according to environmental conditions, operation conditions, and the like of the engine 1 (correction coefficients according to the actual or estimated pressure and temperature in a cylinder).

[Expression 3]

$$\frac{dm_v}{dt} = -2\pi \frac{k}{c_p} D_d \left(1 + 0.23\,\mathrm{Re}^{0.5}\right)\ln\left[1 + \frac{c_p\left(T - T_d\right)}{h_{fg}}\right] \quad \cdots \quad (5)$$

| | |
|---|---|
| $k$: | Thermal conductivity |
| $c_p$: | Gas specific heat |
| $D_d$: | Droplet diameter |
| Re: | Reynolds number |
| $T$: | Gas specific heat |
| $T_d$: | Droplet temperature |
| $h_{fg}$: | Evaporative latent heat |

$$\mathrm{Re} = \left(V_{sw}^{\;2} + V_{sq}^{\;2}\right)^{\frac{1}{2}} \times A / coefficient\ of\ kinematic\ viscosity \quad \cdots \quad (6)$$

| | |
|---|---|
| $V_{sw}$: | Swirl velocity |
| $V_{sq}$: | Squish velocity |
| $A$: | Constant |

$$Dd = 72.36 \cdot P_{cr}^{\;-0.4} \cdot d_0 \quad \cdots \quad (7)$$

| | |
|---|---|
| $P_{cr}$: | Injection pressure (or rail pressure) |
| $d_0$: | Nozzle diameter |

The values of the swirl velocity $V_{sw}$ and the squish velocity $V_{sq}$ in the above Equation (6) are determined in accordance with the shape of engine (particularly, the shape of the combustion chamber 3) and the engine speed. Also, the swirl velocity $V_{sw}$ here refers to a swirl velocity in the area inside the combustion chamber 3 near the outer periphery, for example. Also, a constant A is a value determined for each type of the engine 1 through experimentation or the like in advance. Furthermore, the value of the kinematic viscosity coefficient of air-fuel mixture depends on temperature.

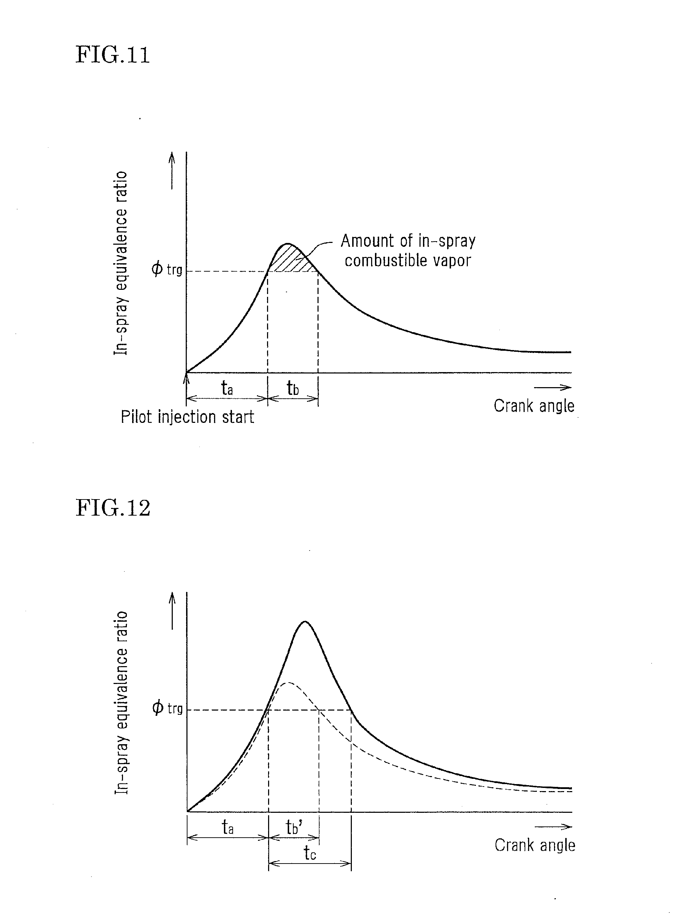

Then, the amount of evaporated fuel is calculated by multiplying the calculated evaporation rate for each crank angle by a period tb during which the in-spray equivalence ratio for each crank angle exceeds the combustible equivalence ratio $\varphi_{trg}$ (see the waveform of a change in the in-spray equivalence ratio shown in FIG. 11) (Equation (8)).

[Expression 4]

$$Current\ vapor\ amount\ m_{vp} = \frac{dm_v}{dt} \times t_b \quad \cdots (8)$$

In this manner, after the amount of evaporated fuel in the last cycle has been extracted, the procedure proceeds to step ST5, where it is determined whether the amount of evaporated fuel exceeds a minimum necessary amount of combustible vapor M. The minimum necessary amount of combustible vapor M is set to a value with which ignition of air-fuel mixture becomes possible in the case where the amount of in-spray combustible vapor of sprays of fuel injected in the pilot injection exceeds the minimum necessary amount of combustible vapor M, and the value is set using a map, for example. FIG. 10 is a map of minimum necessary amount of combustible vapor referenced when the minimum necessary amount of combustible vapor M is set, and the map is created in advance through experimentation, simulation, or the like, and stored in the ROM 102. The minimum necessary amount of combustible vapor M is obtained by applying, to this map of minimum necessary amount of combustible vapor, a current engine speed and a current fuel injection amount (fuel injection amount in the pilot injection of a cylinder that will subsequently undergo the combustion stroke). The lower the engine speed is, or the smaller the fuel injection amount is, the smaller the value is set as the minimum necessary amount of combustible vapor M is.

FIG. 11 is a diagram showing a change in the in-spray equivalence ratio after start of the pilot injection, in which the hatched region corresponds to the amount of in-spray combustible vapor in fuel sprays. If this amount of in-spray combustible vapor exceeds the minimum necessary amount of combustible vapor M and thus the determination result in step ST5 is "YES", the procedure proceeds to step ST7.

In contrast, if this amount of in-spray combustible vapor does not exceed the minimum necessary amount of combustible vapor M and thus the determination result in step ST5 is "NO", the procedure proceeds to step ST6 and the amount increase correction is performed on the pilot injection amount in fuel injection performed in the current cycle. Also in this case, as a specific operation of the amount increase correction of the pilot injection amount, the period of the pilot injection is extended. As an amount of the amount increase correction (a period by which the period of the pilot injection is extended) in this case, the calculated amount of in-spray combustible vapor is compared with the minimum necessary amount of combustible vapor M, and the amount of the amount increase correction is set according to the deviation therefrom. That is, the greater the deviation is (the smaller an actual amount of in-spray combustible vapor is relative to the minimum necessary amount of combustible vapor M), the greater the value is set as the amount of the amount increase correction. When amount increase correction of the pilot injection amount is performed in this manner, the amount of evaporated fuel (amount of in-spray combustible vapor) exceeds the minimum necessary amount of combustible vapor M, and then, the determination result in step ST5 is "YES".

After achieving, by the operations described above, a state in which some in-spray equivalence ratios obtained for the crank angles in the last cycle exceed the in-spray combustible equivalence ratio $\varphi_{trg}$, and also the amount of evaporated fuel (amount of in-spray combustible vapor) exceeds the minimum necessary amount of combustible vapor M, the procedure proceeds to step ST7, where the physical ignition delay is calculated.

The physical ignition delay is calculated as the sum of a period from start of the pilot injection until the in-spray equivalence ratio reaches the combustible equivalence ratio $\varphi_{trg}$ and a period subsequent thereto until the in-spray equivalence ratio drops to the combustible equivalence ratio $\varphi_{trg}$. For example, in the case of a change in the in-spray equivalence ratio as shown in FIG. 11, a period from start of the pilot injection until the in-spray equivalence ratio reaches the in-spray combustible equivalence ratio $\varphi_{trg}$ corresponds to a period ta in FIG. 11, and a period subsequent thereto until the in-spray equivalence ratio drops to the in-spray combustible equivalence ratio $\varphi_{trg}$ corresponds to a period tb in FIG. 11. The sum of these periods (ta + tb) is calculated as the physical ignition delay period.

More specifically, the physical ignition delay period obtained in the case where the amount increase correction of the pilot injection amount in step ST3 (amount increase correction performed due to no in-spray equivalence ratio obtained for each crank angle exceeding the in-spray combustible equivalence ratio $\varphi_{trg}$) and the amount increase correction of the pilot injection amount in step ST6 (amount increase correction performed due to the amount of in-spray combustible vapor not exceeding the minimum necessary amount of combustible vapor M) are both performed will be described with reference to a change in the in-spray equivalence ratio shown in FIG. 12. First, the in-spray equivalence ratio changes as indicated by the dashed line in FIG. 12 due to the amount increase correction of the pilot injection amount performed in step ST3. In this case, although the physical ignition delay period is the sum of the period ta and the period tb' (ta + tb') in FIG. 12, the amount of in-spray combustible vapor does not exceed the minimum necessary amount of combustible vapor M, and thus ignition is not actually performed. After that, the in-spray equivalence ratio changes as indicated by the solid line in FIG. 12 due to the amount increase correction of the pilot injection amount performed in step ST6. In this case, a period from start of the pilot injection until the in-spray equivalence ratio reaches the in-spray combustible equivalence ratio $\varphi_{trg}$ corresponds to a period ta in FIG. 12, and a period subsequent thereto until the in-spray equivalence ratio drops to the in-spray combustible equivalence ratio $\varphi_{trg}$ corresponds to a period tc in FIG. 12. The sum of the periods (ta + tc) is calculated as the physical ignition delay period. That is, the physical ignition delay period is calculated as a period extended toward the angle of delay side due to the amount increase correction of the pilot injection amount performed in step ST6.

Note that upper limit values are set in advance for the in-spray equivalence ratio and the amount of in-spray combustible vapor that are increased as a result of performing the amount increase correction on the pilot injection amount in steps ST3 and ST6. For example, in the case where the in-spray equivalence ratio or the amount of in-spray combustible vapor has reached a corresponding upper limit value due to an increase in the internal temperature of the cylinder, amount decrease correction is performed on the pilot injection amount (amount decrease correction is performed using the in-spray combustible equivalence ratio $\varphi_{trg}$ and the minimum necessary amount of combustible vapor M as lower limit values). In this manner, it is possible to prevent the in-spray equivalence ratio or the amount of in-spray combustible vapor from being excessively increased and causing combustion fluctuation, and at the same time, the amount of fuel consumption can be reduced.

-Ignition time control operation-

Next, ignition time control including an operation of estimating the chemical ignition delay period and an operation of calculating the total ignition delay period will be described.

The chemical ignition delay is calculated based on the temperature and pressure inside the combustion chamber 3 at a point in time at which the in-spray equivalence ratio of fuel injected in the pilot injection has reached the in-spray combustible equivalence ratio $\varphi_{trg}$ after start of the pilot injection (an operation of calculating the chemical ignition delay period by a chemical ignition delay period calculation means). Then, the total ignition delay period is calculated from this calculated chemical ignition delay and the physical ignition delay described above (an operation of calculating the total ignition delay period by the total ignition delay period calculation mean), and the control parameter for the engine 1 is controlled such that the total ignition delay period matches the target ignition delay period.

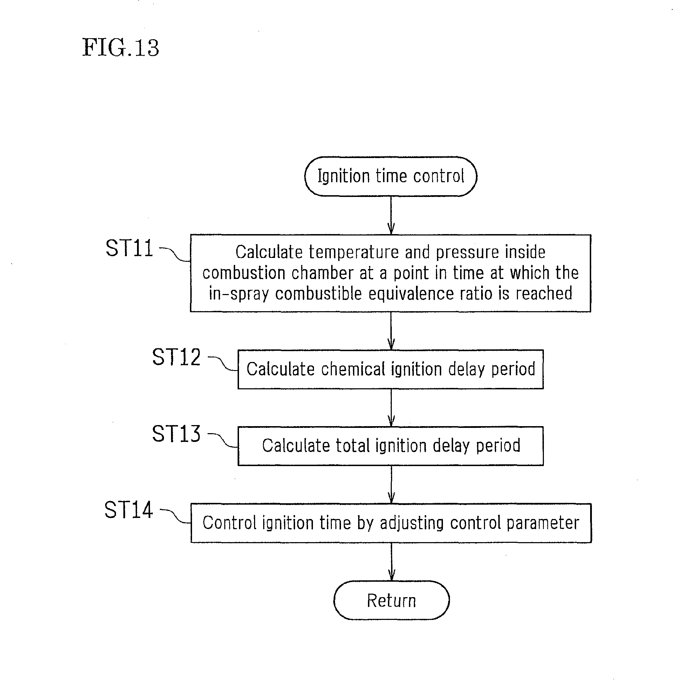

Specific operations will be described below. FIG. 13 is a flowchart illustrating a procedure of the ignition time control including the operation of estimating the chemical ignition delay period and the operation of calculating the total ignition delay period. This flowchart is repeatedly executed every predetermined period of time (for example, several msecs) after the engine 1 is started.

First, in step ST11, the temperature and the pressure inside the combustion chamber at a point in time at which the in-spray equivalence ratio has reached the in-spray combustible equivalence ratio $\varphi_{trg}$ are calculated. Specifically, the temperature and the pressure inside the combustion chamber at a point in time at which the in-spray equivalence ratio has reached the in-spray combustible equivalence ratio $\varphi_{trg}$ (e.g., "0.7") are calculated using Equations (9) to (11) indicated below.

[Expression 5]

$$ T_{equ} = T_o \left( \frac{V_o}{V} \right)^{n-1} \quad \cdots (9) $$

$$ P_{equ} = P_o \left( \frac{V_o}{V} \right)^{n} \quad \cdots (10) $$

$$n = f(gas\ composition,\ temperature) \times A \frac{1}{Q} \quad \cdots (11)$$

$T_o$:  Temperature when intake valve is closed

$V_o$:  Volume when intake valve is closed

$P_o$:  Pressure when intake valve is closed

n:  Polytropic index

Equation (9) is a computation formula for obtaining a temperature $T_{equ}$ inside the combustion chamber at a point in time at which the in-spray equivalence ratio has reached the in-spray combustible equivalence ratio $\varphi_{trg}$, and Equation (10) is a computation formula for obtaining a pressure $P_{equ}$ inside the combustion chamber at a point in time at which the in-spray equivalence ratio has reached the in-spray combustible equivalence ratio $\varphi_{trg}$. Also, "n" in Equations (9) and (10) indicates a polytropic index, which is calculated by Equation (11). The polytropic index n is a function having "gas composition" and "temperature" as variables. Also, "Q" in Equation (11) indicates a fuel injection amount, and "A" indicates an experimentally-obtained correction coefficient.

Note that the method of calculating the temperature and the pressure inside the combustion chamber at a point in time at which the in-spray equivalence ratio has reached the in-spray combustible equivalence ratio $\varphi_{trg}$ is not limited to that described above, and the temperature and the pressure can also be obtained using a known gas state equation (PV = nRT).

After the temperature and the pressure inside the combustion chamber at a point in time at which the in-spray equivalence ratio has reached the in-spray combustible equivalence ratio $\varphi_{trg}$ have been calculated in this manner, the procedure proceeds to step ST12, where a chemical ignition delay period $\tau_c$ is calculated with Equation (12) indicated below. Equation (12) is called "Arrhenius equation".

[Expression 6]

$$\frac{1}{\tau_c} = [O_2]^a [Fuel]^b \exp\left(\frac{-c}{RT}\right) \quad \cdots (12)$$

*a, b, c:*  Experimental constants
$[O_2]$:  Partial pressure of $O_2$
*[Fuel]:*  Partial pressure of fuel
*T:*  Temperature
*R*:  Gas constant

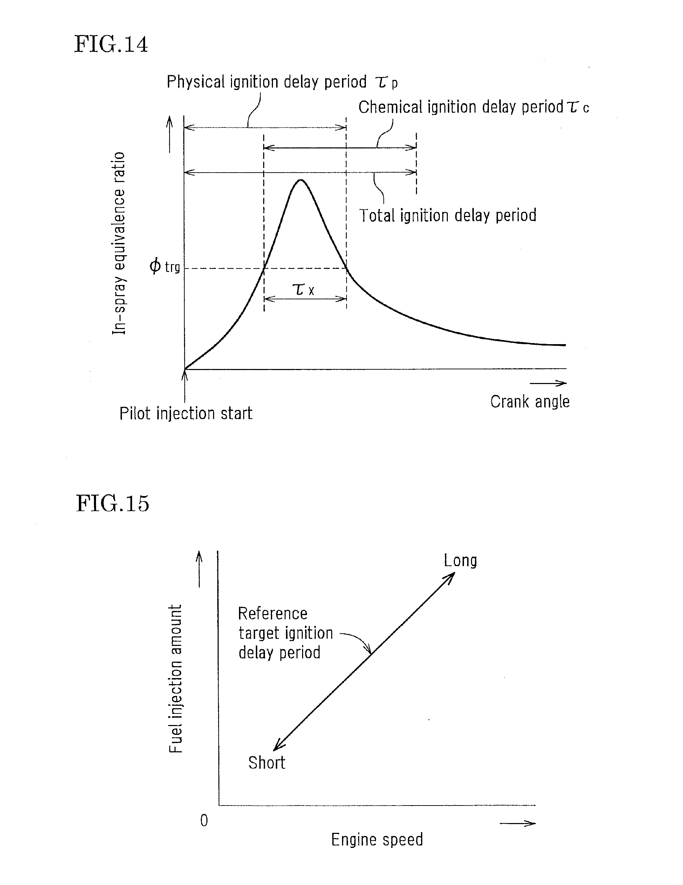

After the chemical ignition delay period $\tau_c$ has been calculated as described above, the procedure proceeds to step ST13, where the total ignition delay period is calculated. As a specific operation of calculating the total ignition delay period, the total ignition delay period is calculated by subtracting a period $\tau_x$ during which the physical ignition delay period $\tau_p$ and the chemical ignition delay period $\tau_c$ are both present from the sum of the physical ignition delay period $\tau_p$ estimated by the operation of estimating the physical ignition delay period described above and the chemical ignition delay period $\tau_c$ ($\tau_p + \tau_c - \tau_x$). That is, since there is a period $\tau_x$ during which the physical ignition delay and the chemical ignition delay overlap each other as shown in FIG. 14, the total ignition delay period is calculated by subtracting this overlapping period $\tau_x$ from the sum of the physical ignition delay period $\tau_p$ and the chemical ignition delay period $\tau_c$.

After thus calculating the total ignition delay period, the procedure proceeds to step ST14, and the ignition time control is performed such that the total ignition delay period matches the target ignition delay period by the adjustment of the control parameter for the engine 1. Specifically, temperature control and oxygen concentration control within the combustion chamber 3 are performed.

Prior to the description of the temperature control and oxygen concentration control, the method for setting the target ignition delay period will be described.

FIG. 15 is a map for setting a "reference target ignition delay period", which is a reference value of the target ignition delay period (reference target ignition delay period map), and is created based on experiments or simulations and stored in the ROM 102 in advance. The "reference target ignition delay period" is acquired by applying the current engine speed and fuel injection amount (the amount of pilot injection to the cylinder that will subsequently undergo the combustion stroke) to the reference target ignition delay period map. The lower the engine speed is, or the smaller the fuel injection amount is, the lower the "reference target ignition delay period" is set. Also, the higher the engine speed is, or the larger the fuel injection amount is, the higher the "reference target ignition delay period" is set.

The target ignition delay period is set by performing correction using various parameters such as the operation state or environmental state of the engine 1 on the reference target ignition delay period acquired using the reference target ignition delay period map. Various parameters for performing this correction include intake temperature, oxygen concentration in intake air, coolant temperature, outside air pressure, outside air temperature, supercharging pressure, and engine transient states.

Hereinafter, control of the temperature and oxygen concentration inside the combustion chamber 3, which are performed for matching the total ignition delay period with the target ignition delay period, will be described.

The temperature control within the combustion chamber 3 includes control of the exhaust recirculation apparatus 8 and of the VVT mechanism 67 (an operation of correcting the temperature inside the combustion chamber by a combustion chamber internal temperature correction means).

As the control of the temperature inside the combustion chamber 3 by the exhaust recirculation apparatus 8, the EGR mode is set to the MPL mode in which exhaust gas is recirculated to the intake pipe 64 via both the low-pressure EGR path 81 and the high-pressure EGR path 82, the flow rate of exhaust gas with relatively low temperature that is recirculated from the low-pressure EGR path 81 and the flow rate of exhaust gas with relatively high temperature that is recirculated from the high-pressure EGR path 82 are adjusted with the EGR valves 84 and 85, and the intake gas temperature in the intake system is adjusted. In other words, the intake gas temperature is raised if the total ignition delay period is longer than the target ignition delay period (the flow rate of exhaust gas recirculated from the high-pressure EGR path 82 is relatively increased: for example, the flow rate of exhaust gas recirculated from the high-pressure EGR path 82 is increased in a state where the amount of the total EGR gas is fixed). On the contrary, the intake gas temperature is reduced if the total ignition delay period is shorter than the target ignition delay period (the flow rate of exhaust gas recirculated from the low-pressure EGR path 81 is relatively increased: for example, the flow rate of exhaust gas recirculated from the low-pressure EGR path 81 is increased in a state where the amount of the total EGR gas is fixed). The intake gas temperature is thereby adjusted such that the total ignition delay period matches the target ignition delay period.

Also, as the control of the temperature inside the combustion chamber 3 by the VVT mechanism 67, the valve closing timing of the intake valve 16 is adjusted. In other words, if the total ignition delay period is longer than the target ignition delay period, the compression end temperature is increased by moving the valve closing timing of the intake valve 16 toward the angle of advance side (toward the bottom dead center side of the piston 13) and increasing the actual compression ratio. On the contrary, if the total ignition delay period is shorter than the target ignition delay period, the compression end temperature is reduced by moving the valve closing timing of the intake valve 16 toward the angle of delay side (toward the top dead center side of the piston 13) and reducing the actual compression ratio. The intake gas temperature is thereby adjusted such that the total ignition delay period matches the target ignition delay period.

On the other hand, the control of oxygen concentration inside the combustion chamber 3 includes control of the exhaust recirculation apparatus 8 (an operation of correcting oxygen concentration inside the combustion chamber by a combustion chamber internal oxygen concentration correction means). In other words, if the total ignition delay period is longer than the target ignition delay period, the oxygen concentration inside the combustion chamber 3 is increased by reducing the opening degree of the EGR valves 84 and 85. On the contrary, if the total ignition delay period is shorter than the target ignition delay period, the oxygen concentration inside the combustion chamber 3 is reduced by increasing the opening degree of the EGR valves 84 and 85. The oxygen concentration inside the combustion chamber 3 is thereby controlled such that the total ignition delay period matches the target ignition delay period.

Note that any one of the above-described adjustments of the control parameters may be executed, or adjustments may be combined.

As described above, in the present embodiment, the physical ignition delay period and the chemical ignition delay period can be estimated with high accuracy by directly estimating the actual state of spray in the combustion field (whether or not a condition under which ignition is possible in the combustion field is established), even in the case where an environmental change, an operation transient, or the like is occurring. Therefore, an appropriate ignition time of air-fuel mixture can be achieved, and it is possible to achieve improvement of exhaust emission and prevent combustion fluctuation and misfire.

Also, according to the present embodiment, a state of spray (equivalence ratio or the like) inside the combustion chamber 3 is obtained using computation and maps, and therefore, a means for directly detecting the pressure inside the combustion chamber 3 is not necessary. In other words, no expensive in-cylinder pressure sensor is necessary, and the ignition delay period can be estimated with high accuracy at low cost.

- Other embodiments -

In the above embodiment, a description has been given of a case in which the present invention is applied to an in-line four-cylinder diesel engine mounted in an automobile. The present invention is not limited to use in an automobile, and is applicable also to engines used in other applications. Also, there is no particular limitation on the number of cylinders or the engine type (classified as an in-line engine, V engine, horizontally opposed engine, and so forth).

Also, in the above embodiment, a description has been given of a case where the present invention is applied to estimation of the ignition delay period of fuel injected in the pilot injection to achieve an appropriate ignition delay period of fuel injected in this pilot injection. The present invention is not limited to the above, and is applicable also to a case where the ignition delay period of fuel injected in the main injection is estimated to achieve an appropriate ignition delay period of fuel injected in this main injection.

Also, although the VVT mechanism 67 in the engine 1 according to the present embodiment can adjust the opening/closing timing of only the intake valve 16, it may be able to adjust the opening/closing timing of both the intake valve 16 and the exhaust valve 17.

Also, in the above embodiment, the control of temperature and of oxygen concentration inside the combustion chamber 3 is performed as the control for matching the total ignition delay period with the target ignition delay period. The present invention is not limited to the above, and a fuel injection pressure (rail pressure) may be corrected. Specifically, if the total ignition delay period is longer than the target ignition delay period, the physical ignition delay period is shortened by setting a high fuel injection pressure and promoting atomization of fuel injected from the injector 23. On the contrary, if the total ignition delay period is shorter than the target ignition delay period, the physical ignition delay period is lengthened by setting a low fuel injection pressure and enlarging the particle size of fuel injected from the injector 23.

Also, in the embodiments described above, although a description was provided of an engine 1 to which the piezo injector 23, which attains a full valve opening state only when a current is applied thereto and thus changes a fuel injection rate, is applied, the present invention is also applicable to engines to which a variable injection rate injector is applied.

Also, in the embodiments described above, the maniverter 77 is provided with the NSR catalyst 75 and the DPNR catalyst 76, but a maniverter provided with the NSR catalyst 75 and a diesel particulate filter (DPF) may be used as well.

Industrial Applicability

The present invention can be applied to combustion control for achieving an appropriate ignition delay period of air-fuel mixture in a common rail in-cylinder direct injection multi-cylinder diesel engine mounted in an automobile.

Descriptions of Reference Numerals

1 Engine (internal combustion engine)
23 Injector (fuel injection valve)
3 Combustion chamber
67 VVT mechanism (control parameter with which temperature inside the combustion chamber can be adjusted)
8 Exhaust recirculation apparatus (control parameter with which temperature and oxygen concentration inside the combustion chamber can be adjusted)
81 Low-pressure EGR path
82 High-pressure EGR path
84 Low-pressure EGR valve
85 High-pressure EGR valve

**Claims**

1.    An ignition delay period estimation apparatus for an internal combustion engine that estimates an ignition delay period of fuel injected from a fuel injection valve toward the inside of a combustion chamber, comprising:

a physical ignition delay period calculation means that calculates a physical ignition delay period based on an equivalence ratio in a spray of the fuel injected from the fuel injection valve;
a chemical ignition delay period calculation means that calculates a chemical ignition delay period based on an environmental condition inside the combustion chamber at a point in time at which the equivalence ratio in the spray of the fuel injected from the fuel injection valve reached a predetermined equivalence ratio; and
a total ignition delay period calculation means that calculates a total ignition delay period of the fuel based on the calculated physical ignition delay period and chemical ignition delay period.

2. The ignition delay period estimation apparatus for an internal combustion engine according to claim 1, wherein the physical ignition delay period calculation means calculates, as the physical ignition delay period, a period of time from a starting point when the fuel was injected from the fuel injection valve until a point in time when the equivalence ratio in the fuel spray, after exceeding an in-spray combustible equivalence ratio at which ignition is possible, falls below the in-spray combustible equivalence ratio.

3. The ignition delay period estimation apparatus for an internal combustion engine according to claim 1, wherein the chemical ignition delay period calculation means calculates the chemical ignition delay period based on a temperature and a pressure inside the combustion chamber at a point in time after the fuel is injected from the fuel injection valve and at which the equivalence ratio in the fuel spray reached an in-spray combustible equivalence ratio at which ignition is possible.

4. The ignition delay period estimation apparatus for an internal combustion engine according to claim 2, wherein it is determined whether or not the equivalence ratio in the spray of the fuel injected from the fuel injection valve reached the in-spray combustible equivalence ratio and the fuel was ignited, and if the equivalence ratio in the spray has not reached the in-spray combustible equivalence ratio and the fuel has not been ignited, amount increase correction is performed on an amount of fuel injection such that the equivalence ratio in the spray reaches the in-spray combustible equivalence ratio, and then the physical ignition delay period is calculated by the physical ignition delay period calculation means.

5. The ignition delay period estimation apparatus for an internal combustion engine according to claim 2, wherein it is determined whether or not an amount of evaporated fuel has reached a predetermined minimum necessary combustible vapor amount in a region where the equivalence ratio in the spray of the fuel injected from the fuel injection valve has reached the in-spray combustible equivalence ratio, and if the amount of evaporated fuel has not reached the minimum necessary combustible vapor amount, amount increase correction is performed on an amount of fuel injection such that the amount of evaporated fuel reaches the minimum necessary combustible vapor amount, and then the physical ignition delay period is calculated by the physical ignition delay period calculation means.

6. The ignition delay period estimation apparatus for an internal combustion engine according to claim 1, wherein at least a main injection and an auxiliary injection that is performed prior to the main injection are able to be executed as fuel injection from the fuel injection valve toward the inside of the combustion chamber, and the total ignition delay period calculation means calculates the total ignition delay period of the fuel with respect to execution of the auxiliary injection.

7. An ignition time control apparatus that controls an ignition time based on a total ignition delay period estimated by the ignition delay period estimation apparatus for an internal combustion engine according to any one of claims 1 to 6, comprising:

a combustion chamber internal temperature correction means that, the more the estimated total ignition delay period is longer than the target total ignition delay period, sets a higher temperature inside the combustion chamber by controlling a control parameter with which the temperature inside the combustion chamber can be adjusted.

8. The ignition time control apparatus for an internal combustion engine according to claim 7, wherein the control parameter with which the temperature inside the combustion chamber can be adjusted is a temperature of exhaust gas that is recirculated from an exhaust system to an intake system, and a temperature of the exhaust gas recirculated from the exhaust system to the intake system is set higher the more the estimated total ignition delay period is longer than the target total ignition delay period.

9. The ignition time control apparatus for an internal combustion engine according to claim 7,

wherein the control parameter with which the temperature inside the combustion chamber can be adjusted is a valve closing timing for an intake valve, and the valve closing timing for the intake valve is moved toward a bottom dead center side of a piston to set a higher actual compression ratio the more the estimated total ignition delay period is longer than the target total ignition delay period.

10. An ignition time control apparatus that controls an ignition time based on a total ignition delay period estimated by the ignition delay period estimation apparatus for an internal combustion engine according to any one of claims 1 to 6, comprising:

a combustion chamber internal oxygen concentration correction means that, the more the estimated total ignition delay period is longer than the target total ignition delay period, sets a higher oxygen concentration inside the combustion chamber by controlling a control parameter with which the oxygen concentration inside the combustion chamber can be adjusted.

11. The ignition time control apparatus for an internal combustion engine according to claim 10, wherein the control parameter with which the oxygen concentration inside the combustion chamber can be adjusted is a recirculation amount of exhaust gas that is recirculated from an exhaust system to an intake system, and a recirculation amount of the exhaust gas recirculated from the exhaust system to the intake system is set smaller the more the estimated total ignition delay period is longer than the target total ignition delay period.

FIG.1

## FIG.2

FIG.3

| | | | |
|---|---|---|---|
| 40 | Crank position sensor | | |
| 41 | Rail pressure sensor | | |
| 42 | Throttle opening degree sensor | | |
| 43 | Air flow meter | | |
| 44 | A/F sensor | | |
| 45 | Exhaust temperature sensor | | |
| 46 | Water temperature sensor | | |
| 47 | Accelerator opening degree sensor | | |
| 48 | Intake pressure sensor | | |
| 49 | Intake temperature sensor | | |

100 : ECU

105

Input interface

104
Backup RAM

103
RAM

| | |
|---|---|
| 21 | Supply pump |
| 23 | Injector |
| 26 | Fuel addition valve |
| 62 | Throttle valve |
| 66 | Swirl control valve |
| 67 | VVT mechanism |
| 84 | Low-pressure EGR valve |
| 85 | High-pressure EGR valve |

Output interface

102
ROM

107

101
CPU

106

FIG.4

FIG.5

FIG.6

FIG.7

FIG.8

```
        ┌──────────────────────────────┐
        │   Physical ignition delay period │
        │      estimation operation        │
        └──────────────────────────────┘
                        │
                        ▼
ST1 ──┐  ┌──────────────────────────────┐
       │  │ Extract in-spray equivalence ratio │
       │  │  for each crank angle in last cycle │
          └──────────────────────────────┘
                        │
                        ▼
ST2 ──┐                                              NO
       ⟨ In-spray equivalence ratio > φtrg ? ⟩────────────┐      ST3
                        │                                  │
                       YES                                 ▼
                        │               ┌──────────────────────────┐
                        │               │  Amount increase correction │
                        │               │    of pilot injection amount │
                        │               └──────────────────────────┘
                        ▼
ST4 ──┐  ┌──────────────────────────────┐
       │  │   Extract amount of evaporated  │
       │  │        fuel in last cycle        │
          └──────────────────────────────┘
                        │
                        ▼
ST5 ──┐                                      NO
       ⟨ Amount of evaporated fuel > M ? ⟩────────────┐      ST6
                        │                              │
                       YES                             ▼
                        │          ┌──────────────────────────┐
                        │          │  Amount increase correction │
                        │          │    of pilot injection amount │
                        │          └──────────────────────────┘
                        ▼
ST7 ──┐  ┌──────────────────────────────┐
       │  │   Calculate physical ignition   │
       │  │         delay period            │
          └──────────────────────────────┘
                        │
                        ▼
                 ┌────────────┐
                 │   Return    │
                 └────────────┘
```

FIG.9

In-spray equivalence ratio

$\phi$ trg

$\phi$ max

B

A

Equivalence ratio after
pilot amount increase

Equivalence ratio before
pilot amount increase

Pilot injection start

Crank angle

FIG.10

Fuel injection amount

Minimum necessary
amount of
combustible vapor : M

Large

Small

Engine speed

FIG.11

FIG.12

FIG.13

Ignition time control

ST11 — Calculate temperature and pressure inside combustion chamber at a point in time at which the in-spray combustible equivalence ratio is reached

ST12 — Calculate chemical ignition delay period

ST13 — Calculate total ignition delay period

ST14 — Control ignition time by adjusting control parameter

Return

FIG.14

Physical ignition delay period $\tau_p$

Chemical ignition delay period $\tau_c$

Total ignition delay period

$\phi_{trg}$

$\tau_x$

In-spray equivalence ratio

Pilot injection start

Crank angle

FIG.15

Long

Reference
target ignition
delay period

Short

Fuel injection amount

0

Engine speed

## INTERNATIONAL SEARCH REPORT

| International application No. |
|---|
| PCT/JP2010/067548 |

A. CLASSIFICATION OF SUBJECT MATTER
*F02D45/00*(2006.01)i, *F02D41/04*(2006.01)i, *F02D41/40*(2006.01)i

According to International Patent Classification (IPC) or to both national classification and IPC

B. FIELDS SEARCHED

Minimum documentation searched (classification system followed by classification symbols)
F02D45/00, F02D41/04, F02D41/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2008-101591 A (Toyota Motor Corp.),<br>01 May 2008 (01.05.2008),<br>paragraphs [0033] to [0053]; fig. 1 to 3<br>(Family: none) | 1,3-4,6<br>2,7-11<br>5 |
| Y<br>A | JP 2009-299490 A (Toyota Motor Corp.),<br>24 December 2009 (24.12.2009),<br>paragraphs [0053] to [0055], [0072] to [0076];<br>fig. 4 to 6<br>(Family: none) | 2,7-11<br>1,3-6 |
| Y<br>A | JP 2003-097329 A (Toyota Motor Corp.),<br>03 April 2003 (03.04.2003),<br>paragraphs [0017] to [0024]<br>(Family: none) | 8-11<br>1-7 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 October, 2010 (29.10.10) | 09 November, 2010 (09.11.10) |

| Name and mailing address of the ISA/<br>　Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2010/067548

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2010-190119 A  (Nissan Motor Co., Ltd.),<br>02 September 2010 (02.09.2010),<br>paragraphs [0020] to [0028]<br>(Family: none) | 8-11<br>1-7 |

Form PCT/ISA/210 (continuation of second sheet) (July 2009)

**EP 2 626 540 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11148412 A
- JP H1193735 A
- JP 2006183466 A
- JP 2010116816 A
- JP 2010180748 A